# EUROPEAN PATENT APPLICATION

(11) **EP 4 316 622 A1**
(43) Date of publication of application: **07.02.2024**
(21) Application number: 22775337.3
(22) Date of filing: 16.03.2022
(51) Int. Cl.: B01D 12/00, B01D 29/01, B08B 3/04

(54) **SLURRY DILUTION/WASHING METHOD**

(30) Priority: 24.03.2021 JP 2021049461
(71) Applicant: Tsukishima Kikai Co., Ltd., Tokyo 104-0053 (JP)
(72) Inventor: KURITA, Shinpei, Tokyo 104-0053 (JP); HAYAKAWA, Tomoki, Tokyo 104-0053 (JP)
(74) Representative: Müller-Boré & Partner Patentanwälte PartG mbB
(86) International application number: PCT/JP2022/011948
(87) International publication number: WO 2022/202549

(57) **Abstract**

Provided is a dilution-washing method which allows removal of impurities dissolved in a raw material slurry of particles, i.e., aggregates or porous materials, while substituting a washing liquid in a small amount. The dilution-washing method includes feeding, to a filtering apparatus, fluid to be processed which includes a raw material slurry with impurities dissolved therein; separating, through the filtering apparatus, the fluid into a filtrate with the impurities and a washed slurry with a decreased content of the impurities; and feeding, to the filtering apparatus, fluid to be processed which includes the washed slurry and a freshly-added washing liquid for removing the impurities; wherein a manner of feeding the washing liquid to be added to the washed slurry is varied depending on the amount of the impurities dissolved in the filtrate separated through the filtering apparatus.

## Description

### FIELD OF ART

The present invention relates to a method of dilution-washing of slurry by which a raw material slurry containing, as its particles, aggregates of fine particles or porous materials, is dilution-washed while substituting a washing liquid.

### BACKGROUND ART

There is known a dilution-washing method for removing impurities dissolved in a suspension by means of filtering apparatus equipped with filtrate chambers and stirring blades, according to which, depending on the amount of the suspension fed to the filtering apparatus, the amount of the washing liquid to be fed to the filtering apparatus is increased/decreased (Patent Publication 1).

There is also known a dilution-washing method for removing impurities dissolved in a material to be processed by means of filtering apparatus equipped with filtrate chambers and stirring blades, according to which, depending on the rotational speed of the stirring blades, the degree of opening of a discharge port for discharging the processed material from the filtering apparatus is increased/decreased (Patent Publication 2).

There is further known a dilution-washing method for removing impurities dissolved in fluid to be processed by means of filtering apparatus equipped with filtrate chambers and stirring blades, according to which the amount of the fluid to be fed to the filtering apparatus for processing is increased/decreased, depending on the concentration of the concentrated fluid discharged from the filtrate chambers (Patent Publication 3).

### PATENT PUBLICATION

Patent Publication 1: JP S60-31761 Y
Patent Publication 2: JP H10-165721 A
Patent Publication 3: JP 2004-255283 A

### SUMMARY OF THE INVENTION

### PROBLEMS TO BE SOLVED BY THE INVENTION

According to the dilution-washing methods discussed above, a disadvantageously large amount of washing liquid is used for removing impurities dissolved in the material to be processed. This problem is even more tangible when the impurities dissolved in a material to be processed are to be removed to the limit, as use of an excessively large amount of washing liquid is required.

It is therefore an object of the present invention to provide a dilution-washing method which allows removal of impurities dissolved in a raw material slurry containing particles, such as aggregates or porous materials, while substituting the washing liquid in a small amount.

### MEANS FOR SOLVING THE PROBLEMS

The present invention, which solves the above problems, as well as the functions and effects thereof are as follows.

The first invention is a method of dilution-washing slurry, including: feeding, to filtering apparatus, fluid to be processed which includes a raw material slurry with impurities dissolved therein; separating, through the filtering apparatus, the fluid into a filtrate with the impurities and a washed slurry with a decreased content of the impurities; and feeding, to the filtering apparatus, fluid to be processed which includes the washed slurry and a freshly-added washing liquid, to thereby remove the impurities;
characterized in that a manner of feeding the washing liquid to be added to the washed slurry is varied depending on an amount of the impurities dissolved in the filtrate separated through the filtering apparatus.

### <Function and Effect>

Since the manner of feeding the washing liquid to be added to the washed slurry is varied depending on the amount of the impurities dissolved in the filtrate separated through the filtering apparatus, the amount of the washing liquid required for the dilution-washing may be saved by varying the amount or the duration of feeding of the washing liquid depending on the amount of the impurities dissolved in the filtrate, and the amount of waste fluid from the washing may be regulated.

The second invention is the method according to the first invention, characterized in that, when an amount of the impurities dissolved in the filtrate is decreased along an extension of a theoretical slope A, a first amount of the washing liquid is added to the washed slurry, whereas, when an amount of the impurities dissolved in the filtrate is decreased along a slope B falling out of the extension of the theoretical slope A, a second amount of the filtrate is added to the washed slurry.

### <Function and Effect>

When the amount of the impurities dissolved in the filtrate is decreased along the extension of the theoretical slope A, a first amount of the washing liquid is added to the washed slurry, whereas, when the amount of the impurities dissolved in the filtrate is decreased along the slope B falling out of the theoretical slope A, a second amount of the filtrate is added to the washed slurry. Accordingly, the amount of the washing liquid required for the dilution-washing may further be saved and the amount of waste fluid from the washing may further be regulated.

The third invention is the method according to the second invention, characterized in that, when a percentage of an inclination angle B1 of the slope B divided by an inclination angle A1 of the theoretical slope A is 80% or lower, the second amount of the filtrate is added to the washed slurry.

### <Function and Effect>

Since the second amount of the filtrate is added to the washed slurry when the percentage of the inclination angle B1 of the slope B divided by the inclination angle A1 of the theoretical slope A is 80% or lower, switching from the washing liquid to the filtrate may be made with certainty.

The fourth invention is the method according to the second or third invention, characterized in that, after the second amount of the filtrate is added to the washed slurry, when an amount of the impurities dissolved in the filtrate is increased, a third amount of the washing liquid, which is smaller than the first amount, is added to the washed slurry.

### <Function and Effect>

Since a third amount of the washing liquid, which is smaller than the first amount, is added to the washed slurry when the amount of the impurities dissolved in the filtrate is increased after the second amount of the filtrate is added to the washed slurry, the amount of the washing liquid required for the dilution-washing may further be saved.

The fifth invention is the method according to the second or third invention, characterized in that, after a lapse of a period of time following addition of the second amount of the filtrate to the washed slurry, when an amount of the impurities dissolved in the filtrate is increased, a third amount of the washing liquid, which is smaller than the first amount, is added to the washed slurry.

### <Function and Effect>

Since a third amount of the washing liquid, which is smaller than the first amount, is added to the washed slurry when the amount of the impurities dissolved in the filtrate is increased after the lapse of a predetermined period of time following the addition of the second amount of the filtrate to the washed slurry, the amount of the washing liquid required for the dilution-washing may further be saved, and the impurities contained in the particles of the washed slurry may be caused to elute in the washed slurry.

The sixth invention is the method according to the fourth or fifth invention, characterized in that, when the amount of the impurities dissolved in the filtrate is increased by 10%, the third amount of the washing liquid is added to the washed slurry.

### <Function and Effect>

Since the third amount of the washing liquid is added to the washed slurry when the amount of the impurities dissolved in the filtrate is increased by 10%, switching from the filtrate to the washing liquid may be made with certainty.

The seventh invention is the method according to any one of the fourth to the sixth inventions, characterized in that the third amount is reduced depending decrease in the amount of the impurities dissolved in the filtrate.

### <Function and Effect>

Since the third amount is reduced depending on the decrease in the amount of the impurities dissolved in the filtrate, the amount of the washing liquid required for the dilution-washing may still further be saved.

The eighth invention is the method according to any one of the first to the seventh inventions, characterized in that the filtering apparatus is equipped with a plurality of filtrate chambers and a plurality of stirring blades, and each of the filtrate chambers has a screen or a filtering membrane attached to its surface.

### <Function and Effect>

Since the filtering apparatus is equipped with a plurality of filtrate chambers and a plurality of stirring blades, and a screen or filtering membrane having a plurality of pores formed therethrough is attached to the surface of each filtrate chamber, the fluid to be processed may efficiently be separated into the filtrate and the washed slurry.

The ninth invention is the method according to the eighth invention, characterized in that the filtrate chambers are fixed on an inner periphery of a main body of the filtering apparatus, the stirring blades are fixed to a rotary shaft disposed across the main body, and the rotary shaft is rotatably driven by a drive unit.

### <Function and Effect>

The filtrate chambers are fixed on the inner periphery of the main body of the filtering apparatus, the stirring blades are fixed to the rotary shaft disposed across the main body, and the rotary shaft is rotatably driven by a drive unit. Accordingly, the impurities may efficiently be brought through the screen or filtering membrane into the filtrate chambers.

The tenth invention is the method according to the eighth invention, characterized in that the stirring blades are fixed on an inner periphery of a main body of the filtering apparatus, the filtrate chambers are fixed to a rotary shaft disposed across the main body, and the rotary shaft is rotatably driven by a drive unit.

### <Function and Effect>

The stirring blades are fixed on the inner periphery of the main body of the filtering apparatus, the filtrate chambers are fixed to the rotary shaft disposed across the main body, and the rotary shaft is rotatably driven by a drive unit. Accordingly, the impurities may efficiently be brought through the screen or filtering membrane into the filtrate chambers.

### EFFECT OF THE INVENTION

There is provided a method of dilution-washing which allows removal of impurities dissolved in a raw material slurry containing particles, such as aggregates or porous materials, while substituting a washing liquid in a small amount.

### BRIEF DESCRIPTION OF THE DRAWINGS

Fig. 1 is an explanatory diagram of the dilution-washing system.
Fig. 2 is a connection diagram of the controller.
Fig. 3 is an explanatory diagram of the dilution-washing method.
Fig. 4 is an explanatory chart showing the change in conductivity of filtrate from dilution-washing of slurry of fine metal particles, attributed to the impurities dissolved in the slurry.

### MODE FOR CARRYING OUT THE INVENTION

### <Dilution-Washing System>

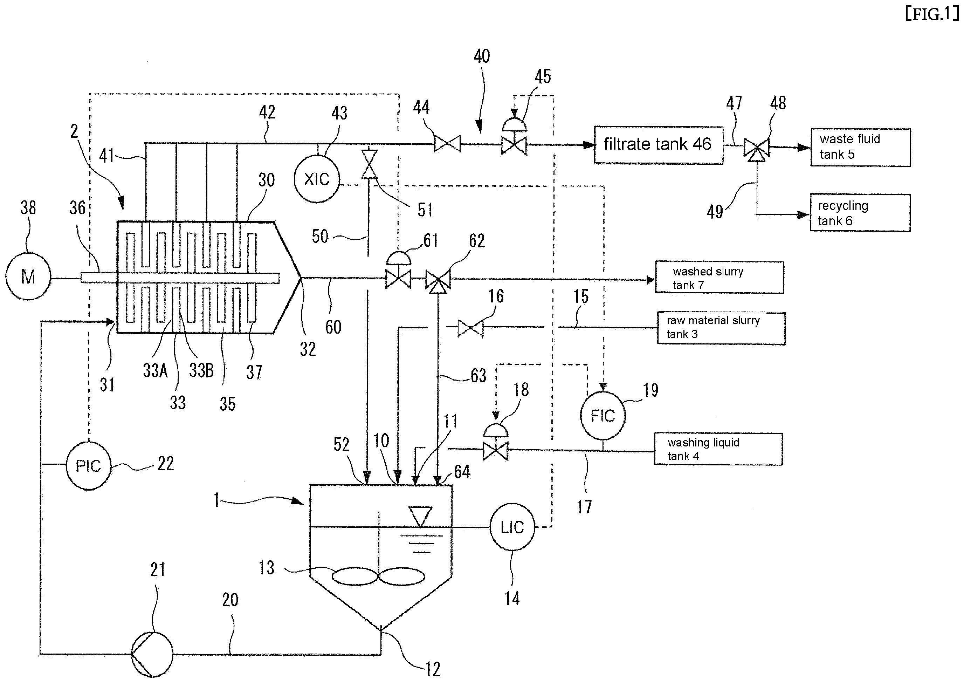

Referring to Fig. 1, the dilution-washing system includes a slurry tank 1 for storing fluid to be processed, which is composed of a raw material slurry and a washing liquid, and filtering apparatus 2 for removing impurities dissolved in the fluid supplied from the slurry tank 1.

In the upper part of the slurry tank 1 are formed an inlet port 10 for feeding the raw material slurry into the slurry tank 1 and an inlet port 11 for feeding the washing liquid into the slurry tank 1, whereas in the lower part of the slurry tank 1 is formed an outlet port 12 for discharging the fluid to be processed which is stored in the slurry tank 1.

The slurry tank 1 is equipped with a stirrer 13 for stirring to homogenize the fluid to be processed which is stored in the slurry tank 1, and a fluid level sensor 14 for determining the level of the fluid.

To the inlet port 10 is connected via piping 15 a raw material slurry tank 3, in which the raw material slurry is stored, and the piping 15 is provided in the middle with an on-off valve 16.

To the inlet port 11 is connected via piping 17 a washing liquid tank 4, in which the washing liquid is stored, and the piping 17 is provided in the middle with a opening control valve 18 and a flow sensor 19, upstream of the opening control valve 18, for measuring the flow rate of the washing liquid passing through the piping 17. In this way, the flow rate of the washing liquid passing through the piping 17 may be regulated by controlling the opening control valve 18 depending on the value measured with the flow sensor 19. Further, the flow rate of the washing liquid passing through the piping 17 may also be regulated by controlling the opening control valve 18 via the flow sensor 19 depending on the value measured with a sensor 43 to be discussed later.

The fluid to be processed which is discharged through the outlet port 12 of the slurry tank 1 passes through piping 20 and feeds to a feed port 31 of the filtering apparatus 2. The piping 20 is provided in the middle with a slurry feed pump 21 for pumping the fluid to be processed under predetermined pressure, and a pressure sensor 22, downstream of the feed pump 21, for measuring the pressure applied to the fluid.

The filtering apparatus 2 is built in generally a cylindrical shape. The main body 30 of the filtering apparatus 2 is provided in its left wall in generally a circular shape with a feed port 31 for feeding the fluid to be processed into the filtering apparatus 2, and in its right wall in generally a circular shape with a discharge port 32 for discharging the processed fluid which has been deprived of a certain amount of impurities and the washing liquid and concentrated through the filtering apparatus 2 (referred to as a washed slurry hereinbelow).

On the inner periphery of the generally cylindrical main body 30, ring-shaped filtrate chambers 33 are formed at predetermined intervals in the right-left direction. Fig. 1 shows an embodiment having four filtrate chambers 33, but three or less or five or more filtrate chambers may be formed.

In the left of each filtrate chamber, a screen 33A having a number of pores with a particular pore size is attached, while in the right of each filtrate chamber, a screen 33B having a number of pores with a particular pore size is attached. In this way, a certain amount of the impurities dissolved in the raw material slurry and a predetermined amount of the washing liquid in the fluid to be processed are brought through the pores of the screens 33A, 33B into the filtrate chambers 33, to deprive the raw material slurry in the fluid being processed of the impurities dissolved therein to thereby eliminate the impurities dissolved in the washed slurry.

The screens 33A and 33B may be selected from various types of screens, and sintered screens composed of integrated, multi-layered wire mesh with particular mesh size, or wedge wire screens composed of wires having an inverted-triangular cross-section juxtaposed at regular intervals, may preferably be used. In this way, particles of the raw material slurry deposited on the left-side surface of the screen 33A and on the right-side surface of the screen 33B may be removed efficiently. Further, in place of the screens, filtration membranes, such as microfiltration membranes or ultrafiltration membranes, may be used.

Between adjacent filtrate chambers 33, a slurry chamber 35 is formed. The leftmost slurry chamber 35 is formed between the left wall of the main body 30 and a filtrate chamber 33, whereas the rightmost slurry chamber 35 is formed between a filtrate chamber 33 and the right wall of the main body 30. Fig. 1 shows the embodiment having five slurry chambers 35, but four or less or six or more slurry chambers 35 may be formed depending on the number of the filtrate chambers 33.

A rotary shaft 36 extending in the right-left direction is disposed between the right and left walls of the main body 30, and is provided with stirring blades 37 arranged at predetermined intervals in the right-left direction, each extending radially. The rotary shaft 36 is rotatably driven by a drive unit 38, such as a motor, disposed on the left of the left wall of the main body 30. In this way, a certain amount of the impurities dissolved in the raw material slurry and a predetermined amount of the washing liquid in the fluid being processed are efficiently brought through the pores of the screens 33A, 33B into the filtrate chambers 33, and the particles of the raw material slurry in the fluid are kept from depositing on the surfaces of the screens 33A, 33B to avoid clogging of the pores of the screens 33A, 33B. Fig. 1 shows the embodiment having five stirring blades 37, but four or less or six or more stirring blades 37 may be provided depending on the number of the slurry chambers 35.

Note that Fig. 1 shows an embodiment of the filtering apparatus 2, wherein the filtrate chambers 33 are provided on the inner periphery of the main body 30, while the stirring blades 37 are provided on the rotary shaft 36, so that the stirring blades 37 are rotated in the slurry chambers 35. Alternatively, filtering apparatus 2 may be formed wherein the stirring blades 37 are provided on the inner periphery of the main body 30, while the filtrate chambers 33 are provided on the rotary shaft 36, so that the filtrate chambers 33 are rotated in the slurry chambers 35.

To the filtrate chambers 33 is connected a filtrate discharging unit 40. The filtrate discharging unit 40 is composed of piping 41 connected to each filtrate chamber 33 through its outer periphery, piping 42 connected to the piping 41, and a filtrate tank 46 connected to the piping 42.

The piping 42 is provided in the middle with a sensor 43 for measuring the amount of the impurities dissolved in the filtrate passing through the piping 42.

The sensor 43 may be any device capable of measuring or extrapolating the amount of the impurities dissolved in the filtrate, and may be, for example, a conductivity meter for measuring conductivity of the filtrate; a pH meter for measuring acid and alkali concentrations of the filtrate; a Brix meter for measuring the amount of sugars in the filtrate; an absorptiometer for measuring light absorption characteristics of color matters, aromatics, organometallic complexes, or the like in the filtrate; an ion meter for determining particular ions, such as chloride ions, ammonia, or the like in the filtrate; an oxidation-reduction potentiometer (ORP) for determining oxidizing-reducing substances in the filtrate, including oxidizing agents, such as nitric acid or permanganate, and reducing agents, such as oxalic acid or divalent iron ions; or a dissolved oxygen (DO) meter for determining dissolved oxygen in the filtrate.

The piping 42 is provided, downstream of the sensor 43, with an on-off valve 44 and an opening control valve 45 with regulated degree of opening. In this way, the opening control valve 45 may be controlled depending on a value measured with the fluid level sensor 14 to regulate the flow rate of the filtrate passing through the piping 42, to thereby maintain the level of the fluid to be processed in the slurry tank 1 at a predetermined level.

A discharge port of the filtrate tank 46 is connected to piping 47, downstream portion of which is provided with a switching valve 48. In this way, through control of the switching valve 48, the filtrate temporarily stored in the filtrate tank 46 may be fed as waste fluid to a waste fluid tank 5 through the piping 47, or fed to a recycling tank 6 through piping 49 for reuse.

Piping 50 is connected to the piping 42 between the sensor 43 and the on-off valve 44, and to an inlet port 52 in the upper part of the slurry tank 1, at the downstream end. The piping 50 is also provided in the middle with an on-off valve 51. In this way, with the on-off valve 44 closed and the on-off valve 51 opened, the filtrate passing through the piping 42 may be fed to the slurry tank 1 for reuse as a washing liquid.

To the discharge port 32 of the main body 30 is connected via piping 60 a washed slurry tank 7 for storing the washed slurry.

The piping 60 is provided in the middle with an opening control valve 61 with regulated degree of opening. In this way, the opening control valve 61 may be controlled depending on the value measured with the pressure sensor 22 to regulate the flow rate of the washed slurry passing through the piping 60, to thereby maintain the pressure applied to the fluid to be processed at a particular level.

The piping 60 is provided with a switching valve 62 downstream of the opening control valve 61. In this way, the switching valve 62 may be controlled depending on the value measured with the sensor 43, and when the amount of the impurities dissolved in the washed slurry is less than the predetermined amount, the washed slurry may be passed through the piping 60 into the washed slurry tank 7, whereas when the amount of the impurities dissolved in the washed slurry is the same as or more than the predetermined amount, the washed slurry may be passed through the piping 63 and returned into the slurry tank 1 through the inlet port 64 in the upper part of the slurry tank 1.

### <Controller>

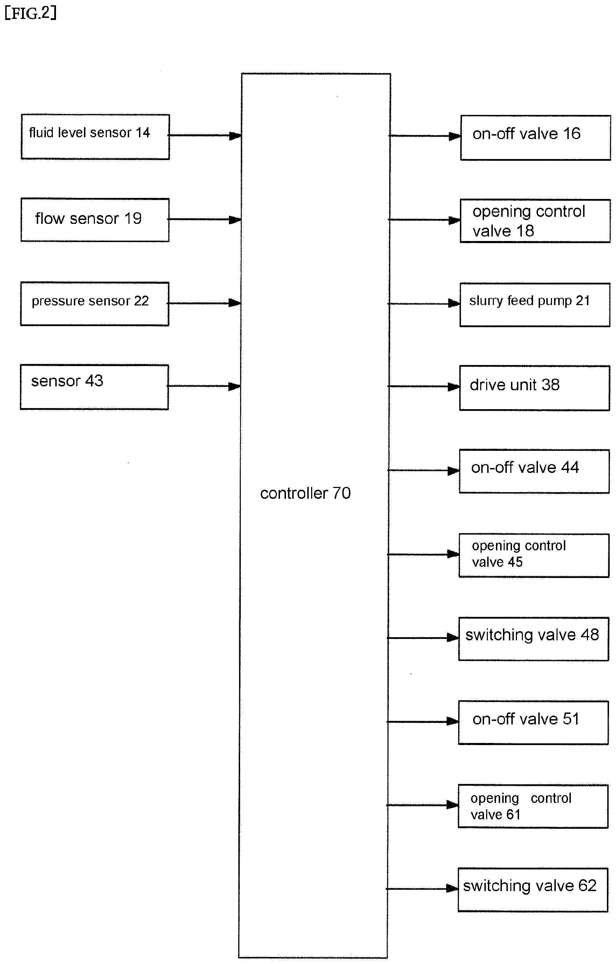

Referring to Fig. 2, to the input of the controller 70 are connected, via particular input interface circuitry, the fluid level sensor 14 for determining the level of the fluid to be processed which is stored in the slurry tank 1, the flow sensor 19 for measuring the flow rate of the washing liquid passing through the piping 17, the pressure sensor 22 for measuring the pressure applied to the fluid to be processed which is being fed to the filtering apparatus 2, and the sensor 43 for measuring the amount of the impurities dissolved in the filtrate passing through the piping 42.

To the output of the controller 70 are connected, via particular output interface circuitry, the on-off valve 16 provided in the piping 15, the opening control valve 18 provided in the piping 17, the slurry feed pump 21 provided in the piping 20 for pumping the fluid to be processed under predetermined pressure, the drive unit 38 for rotatably driving the rotary shaft 36, the on-off valve 44 and the opening control valve 45 provided in the piping 42, the switching valve 48 provided in the piping 47, the on-off valve 51 provided in the piping 50, and the opening control valve 61 and the switching valve 62 provided in the piping 60.

### <Dilution-Washing Method>

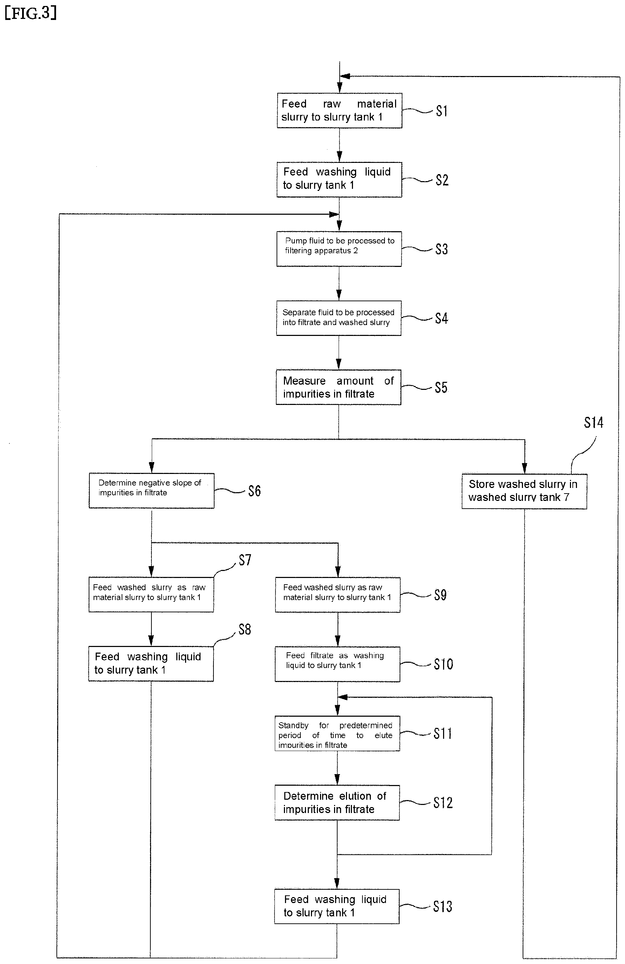

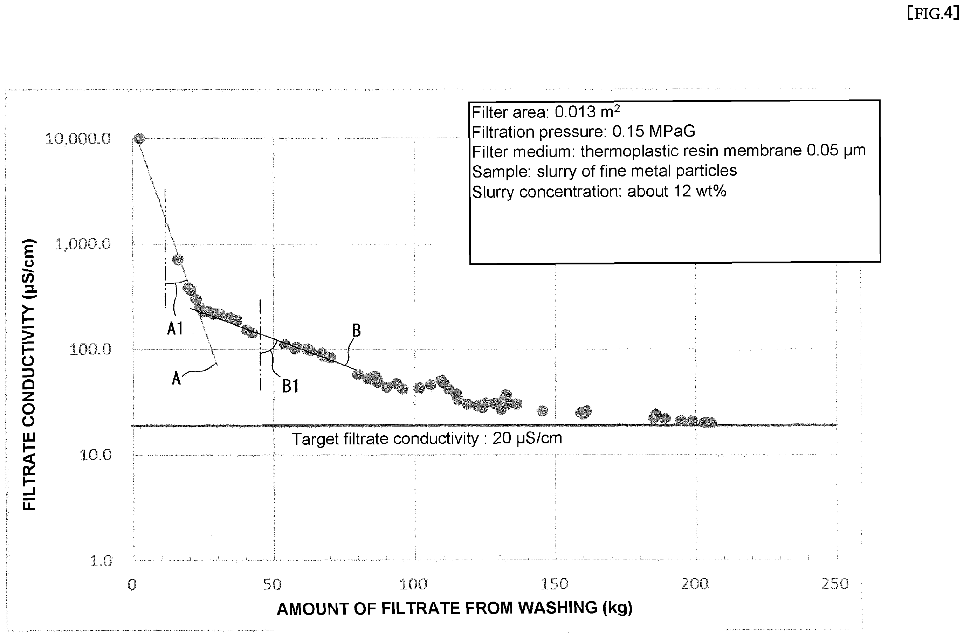

Referring to Fig. 3, in Step S1, the controller 70 causes the on-off valve 16 to open for a predetermined period of time for feeding a predetermined amount of slurry of fine metal particles, which is a raw material slurry, from the raw material slurry tank 3 to the slurry tank 1, and the process proceeds to Step S2. In the following, for the sake of easy understanding, discussion is made with reference to Fig. 4, showing the results of dilution-washing of slurry of fine metal particles. Fig. 4 is a semi-logarithmic graph in which the amount [kg] of filtrate from washing is plotted on the horizontal axis, and the conductivity [p,S/cm] of filtrate is plotted on the logarithmic scale on the vertical axis.

In Step S2, the controller 70 operates for a predetermined period of time the opening control valve 18 for feeding a predetermined amount of water as the washing liquid from the washing liquid tank 4 to the slurry tank 1 to prepare fluid to be processed having a slurry concentration of about 12 wt%, and the process proceeds to Step S3. Note that, at the start of operation of the dilution-washing system, Step S2 is omitted, and only slurry of fine metal particles as a raw material slurry is fed to the filtering apparatus 2. After this cycle, water as the washing liquid is fed to the slurry tank 1 in Step S2 in an amount corresponding to the amount of the filtrate discharged from the filtering apparatus 2. Alternatively, fluid to be processed which has a slurry concentration of about 12 wt% and is stored in advance in the raw material slurry tank 3, may be fed to the slurry tank 1, omitting Step S2, and the process may proceed to Step 3.

In Step S3, the controller 70 causes the slurry feed pulp 21 to be driven for a predetermined period of time for applying pressure at 0.15 MPaG to the fluid to be processed which is passing through the piping 20, and the process proceeds to Step 4.

In Step S4, the controller 70 operates the drive unit 38 for a predetermined period of time for rotating the stirring blades 37 via the rotary shaft 36 to cause water and salt, which is the impurities dissolved in the fluid to be fed to the filtering apparatus 2 for washing, to be brought as a filtrate into the filtrate chambers 33 through the screens 33A, 33B attached thereto, and discharge out of the filtering apparatus 2 through the piping 41, while the washed fluid, which has been deprived of the salt and concentrated, is discharged as a washed slurry out of the filtering apparatus 2 through the piping 60, and the process proceeds to Step S5. Note that the screens 33A, 33B have a filter area of 0.013 m², a filter medium of polyether sulfone, and a pore size of 0.05 µm.

In Step S5, the controller 70 determines whether the filtrate passing through the piping 42 has a conductivity higher than the product specification value of 20 µS/cm or not as measured with the sensor 43, such as a conductivity meter and, when the filtrate conductivity is determined as being higher than 20 µS/cm, the process proceeds to Step S6, whereas when the filtrate conductivity is determined as being 20 µS/cm or lower, the process proceeds to Step S14.

In Step S6, the controller 70 compares the theoretical slope A of conductivity of filtrate stored in the memory and a slope B calculated from the conductivity of the filtrate measured with the sensor 43 and, when the slope B is determined as being on the extension of the theoretical slope A, the process proceeds to Step S7, whereas when the slope B is determined as not being on the extension of the theoretical slope A, the process proceeds to Step S9. In this way, the manner of the dilution-washing may be switched depending on the state of the slurry of fine metal particles being dilution-washed, so that the amount of water fed from the washing liquid tank 4 into the slurry tank 1 may be saved. When the slope B is determined as not being on the extension of the theoretical slope A, and the percentage of the inclination angle B1 of the negative slope B divided by the inclination angle A1 of the negative theoretical slope A is 80% or lower, the process may more preferably proceed to Step S9.

The region where the conductivity of filtrate is on the extension of the theoretical slope A is referred to as a constant-rate washing region or a dilution-washing region, whereas the region where the conductivity of filtrate is not on the extension of the theoretical slope A is referred to as a falling-rate washing region or a leaching-washing region. In Fig. 4, the region where the amount of the filtrate from washing is about 25 kg or less is the constant-rate washing region, whereas the region where the amount of the filtrate from washing is over about 25 kg is the falling-rate washing region.

The slope B may be calculated by various methods, e.g., by dividing the sum of the conductivity of the filtrate measured with the sensor 43 in current Step S6 and the conductivities of the filtrate measured with the sensor 43 in Step S6 in the cycles prior to the current cycle, e.g., in one to nine cycles prior to the current cycle, by the total amount of the water fed in current Step S6 and the water fed in Step S6 in one to nine cycles prior to the current cycle. The inclination angle A1 refers to the smaller of the angles of intersection between the theoretical slope A and a virtual line extending in the top-bottom direction in Fig. 4, whereas the inclination angle B1 refers to the smaller of the angles of intersection between the slope B and a virtual line extending in the top-bottom direction in Fig. 4.

In Step S7, the controller 70 operates the switching valve 62 for a predetermined period of time for the washed slurry discharged into the piping 60 to pass through the piping 63 and feed through the inlet port 64 into the slurry tank 1, and the process proceeds to Step S8. In this way, fine metal particles of the salt dissolved in the slurry of fine metal particles can be surely removed, whereby the washed slurry, from which a certain amount of salt has been removed, may be recycled as slurry of fine metal particles.

In Step S8, the controller 70 operates the opening control valve 18 depending on the measured value of the fluid level sensor 14 for feeding the water from the washing liquid tank 4 into the slurry tank 1 to prepare a fluid to be processed having a slurry concentration of about 12 wt%, and the process returns to Step S3. In this way, with the slurry of fine metal particles, the conductivity of the filtrate was successfully reduced from 10000 µS/cm to about 300 µS/cm along the extension of the theoretical slope A as shown in Fig. 4.

In Step S9, the controller 70 operates the switching valve 62 for a predetermined period of time for the washed slurry discharged into the piping 60 to pass through the piping 63 and feed through the inlet port 64 into the slurry tank 1, and the process proceeds to Step S10. In this way, fine metal particles of the salt dissolved in the slurry of fine metal particles can be surely removed, whereby the washed slurry, from which a certain amount of salt has been removed, may be recycled as slurry of fine metal particles.

In Step S10, the controller 70 causes the on-off valve 51 to open for a predetermined period of time and the opening control valve 45 to have a regulated degree of opening, for the filtrate discharged into the piping 42 to pass through the piping 50 and feed through the inlet port 52 into the slurry tank 1, and the process proceeds to Step S11. In this way, the filtrate discharged into the piping 42 may be reused as part or all of the washing liquid, to thereby significantly save the amount of the water fed from the washing liquid tank 4 into the slurry tank 1.

In Step S11, the controller 70 is kept on standby for a predetermined period of time, after the lapse of which the process proceeds to Step S12. In this way, the salt contained in the fine metal particles of the slurry may be caused to elute in the water.

In Step S12, the controller 70 determines whether the conductivity of the filtrate currently measured with the sensor 43 is higher by a predetermined percentage than the conductivity of the filtrate measured with the sensor 43 in Step S12 in the previous cycle or not and, when the current conductivity of the filtrate is higher by a predetermined percentage than the conductivity of the filtrate measured in the previous cycle, the process proceeds to Step S13, whereas when the current conductivity of the filtrate is not higher by a predetermined percentage than the conductivity of the filtrate measured with the sensor 43 in Step S12 in the previous cycle, the process returns to Step 11. In this way, the salt eluted in the water may be eliminated efficiently. The process preferably proceeds to Step S13 when the conductivity of the filtrate currently measured with the sensor 43 is higher by 10% than the conductivity of the filtrate measured with the sensor 43 in Step S12 in the previous cycle.

In Step S13, the controller 70 operates the opening control valve 18 via the flow sensor 19 for a predetermined period of time depending on the conductivity of the filtrate measured with the sensor 43 for feeding a predetermined amount of the water from the washing liquid tank 4 into the slurry tank 1, and the process returns to Step S3. Note that the amount of the water fed in Step S13 is less than the amount of the water fed in Step S2, and may be reduced successively or stepwise depending on the conductivities of the filtrate measured with the sensor 43, or may be reduced according to a predetermined pattern stored in a memory. In this way, the amount of the water fed from the washing liquid tank 4 into the slurry tank 1 may be saved. Further, as shown in Fig. 4, with the slurry of fine metal particles, the conductivity of the filtrate was successfully reduced from about 300 µS/cm to 20 µS/cm or lower along the slope B.

In Step S14, the controller 70 operates the switching valve 62 for the washed slurry discharged into the piping 60 to pass through the piping 60 and feed into the washed slurry tank 7, and the process returns to Step S1. In this way, the slurry of fine metal particles may be dilution-washed to have a filtrate conductivity of 20 µS/cm or lower.

### INDUSTRIAL APPLICABILITY

The present invention is applicable to a dilution-washing system in which a raw material slurry of particles, i.e., aggregates of fine particles or porous materials, such as activated carbon, is dilution-washed while substituting a washing liquid, as well as such a dilution-washing method.

### DESCRIPTION OF REFERENCE SIGNS

2: filtering apparatus
30: main body
33: filtrate chamber
33A: screen
33B: screen
36: rotary axis
37: stirring blade
38: drive unit
A: theoretical slope
A1: inclination angle
B: slope
B1: inclination angle

## Claims

1. A method of dilution-washing slurry, comprising:
feeding, to filtering apparatus, fluid to be processed which includes a raw material slurry with impurities dissolved therein;
separating, through the filtering apparatus, the fluid into a filtrate with the impurities and a washed slurry with a decreased content of the impurities; and
feeding, to the filtering apparatus, fluid to be processed which includes the washed slurry and a freshly-added washing liquid, to thereby remove the impurities;
**characterized in that** a manner of feeding the washing liquid to be added to the washed slurry is varied depending on an amount of the impurities dissolved in the filtrate separated through the filtering apparatus.

2. The method of dilution-washing slurry according to claim 1,
**characterized in that**, when an amount of the impurities dissolved in the filtrate is decreased along an extension of a theoretical slope A, a first amount of the washing liquid is added to the washed slurry, whereas, when an amount of the impurities dissolved in the filtrate is decreased along a slope B falling out of the extension of the theoretical slope A, a second amount of the filtrate is added to the washed slurry.

3. The method of dilution-washing slurry according to claim 2,
**characterized in that**, when a percentage of an inclination angle B1 of the slope B divided by an inclination angle A1 of the theoretical slope A is 80% or lower, the second amount of the filtrate is added to the washed slurry.

4. The method of dilution-washing slurry according to claim 2 or 3,
**characterized in that**, after the second amount of the filtrate is added to the washed slurry, when an amount of the impurities dissolved in the filtrate is increased, a third amount of the washing liquid, which is smaller than the first amount, is added to the washed slurry.

5. The method of dilution-washing slurry according to claim 2 or 3,
**characterized in that**, after a lapse of a period of time following addition of the second amount of the filtrate to the washed slurry, when an amount of the impurities dissolved in the filtrate is increased, a third amount of the washing liquid, which is smaller than the first amount, is added to the washed slurry.

6. The method of dilution-washing slurry according to claim 4 or 5,
characterized int that, when the amount of the impurities dissolved in the filtrate is increased by 10%, the third amount of the washing liquid is added to the washed slurry.

7. The method of dilution-washing slurry according to any one of claims 4 to 6,
**characterized in that** the third amount is reduced depending on decrease in the amount of the impurities dissolved in the filtrate.

8. The method of dilution-washing slurry according to any one of claims 1 to 7,
**characterized in that** the filtering apparatus comprises a plurality of filtrate chambers and a plurality of stirring blades, and each of the filtrate chambers has a screen or a filtering membrane attached to its surface.

9. The method of dilution-washing slurry according to claim 8,
**characterized in that** the filtrate chambers are fixed on an inner periphery of a main body of the filtering apparatus, the stirring blades are fixed to a rotary shaft disposed across the main body, and the rotary shaft is rotatably driven by a drive unit.

10. The method of dilution-washing slurry according to claim 8,
**characterized in that** the stirring blades are fixed on an inner periphery of a main body of the filtering apparatus, the filtrate chambers are fixed to a rotary shaft disposed across the main body, and the rotary shaft is rotatably driven by a drive unit.
